# EUROPÄISCHE PATENTSCHRIFT

(11) **EP 1 717 453 B1**
(45) Veröffentlichungstag und Bekanntmachung des Hinweises auf die Patenterteilung: **03.06.2015**
(21) Anmeldenummer: 06113111.6
(22) Anmeldetag: 26.04.2006
(51) Int. Cl.: F16B 21/09, F16B 21/16, F16B 5/06

(54) **Clip und Befestigungssystem mit einem Clip**
Clip and fastening system with a clip
Clip et système de fixation avec un clip

(30) Priorität: 27.04.2005 DE 102005020011
(43) Veröffentlichungstag der Anmeldung: 02.11.2006
(73) Patentinhaber: Newfrey LLC, Newark, Delaware 19711 (US)
(72) Erfinder: Rosemann, Frank, 35516, Münzenberg (DE)
(74) Vertreter: Schwarz-Haar, Gabriele

(56) Entgegenhaltungen:
- EP-A- 1 460 322
- EP-A- 1 496 270
- GB-A- 2 118 612
- US-A- 3 239 988
- US-B1- 6 347 438

## Beschreibung

Die Erfindung betrifft einen Clip zum Verbinden zweier Bauteile, umfassend einen Uförmigen, eine Einführöffnung aufweisenden Haltebereich, der dazu bestimmt ist, einen von dem ersten Bauteil abstehenden und eine Öffnung im zweiten Bauteil durchdringende Zapfen, der an seinem freistehenden Ende einen Kopf hat, unterhalb des Kopfes zu umgreifen. Die Erfindung betrifft ferner ein Befestigungssystem mit einem derartigen Clip.

Aus EP-A-1 460 322 ist eine mehrteilige Vorrichtung zum Befestigen von langgestreckten, flachen Gegenständen, insbesondere Flachbandleitungen, an einer Unterlage bekannt, die einen Halter mit eine Haltebereich zum Festhalten eines langgestreckten, flachen Gegenstands und einen Befestigungsbereich zum Befestigen des Halters aufweist. Die Vorrichtung hat einen Sockel mit einer Ausnehmung, in welcher der Befestigungsbereich des Halters mit Hilfe von Kupplungselementen befestigbar ist. Der Sockel ist der getrennt von dem Halter an einem Zapfen einer Unterlage befestigbar und weist hierzu einen. U-förmigen Haltebereich mit einer Einfuhröffiumg und einer vom Boden der Ausnehmung hochstehenden Wand auf.

Aus EP-A-1 496 270 ist ein Clip in Form einer tellerförmigen Scheibe mit mittiger Nabe und einem konischen federnden Rand bekannt, der Rand durch radiale Schlitze in vier flexible Sektoren unterteilt ist, die den Clip nachgiebig an einem zu haltenden Bauteil anstützen,

Aufgabe der Erfindung ist es, einen Clip der angegebenen Art zu schaffen, der sich von Hand mit dem Daumen oder einem Finger leicht montieren läßt und der eine stabile und gegen selbsttätiges Lösen sichere Verbindung zweier Bauteile ermöglicht.

Zur Lösung dieser Aufgabe weist der Clip nach der Erfindung eine zur Abstützung am zweiten Bauteil und in der Gegenrichtung am Kopf des Zapfens ausgebildete Halteplatte auf, die auf ihrer Oberseite in ihrer Mitte eine muldenartige Vertiefung und im Zentrum der muldenartigen Vertiefung eine Ausnehmung hat, in welcher der Haltebereich ausgebildet und nach unten versenkt angeordnet ist.

Durch die erfindungsgemäße Gestaltung des Clips kann dieser mit der Unterseite der Halteplatte auf den Kopf des mit dem Clip zu verbindenden Zapfens von Hand aufgelegt und dann mit Hilfe des in die muldenartige Vertiefung eingreifenden Daumens oder Fingers quer zum Zapfen derart verschoben werden, daß der Zapfen und der Kopf durch die Einführöffnung in den U-formigen Haltebereich eindringen. Durch die versenkte Anordnung des Haltebereichs in der Ausnehmung im Zentrum der muldenartigen Vertiefung nimmt die Ausnehmung den Kopf des Zapfens auf, so daß der in die Mulde eingreifende Daumen oder Finger während des Montagevorgangs über den Kopf des Zapfens hinweggleitet und die Montagebewegung nicht durch das Anstoßen des Daumens oder Fingers an den Kopf des Zapfens behindert wird.

Um die Schubkraft des Daumens oder Fingers noch besser auf den Clip übertragen zu können, kann erfindungsgemäß auf der Oberseite der Halteplatte an dem der Einführöffnung des Haltebereichs benachbarten Rand der muldenartigen Vertiefung eine wulstartige Erhöhung vorgesehen sein, die eine zusätzliche Abstützung für die Kuppe des Daumens oder eines Fingers bildet.

Nach einem weiteren Vorschlag der Erfindung ist die Halteplatte auf entgegengesetzten Seiten mit sich quer zur Montagerichtung erstreckenden Randausnehmungen versehen, in denen sich vom Rand der Vertiefung nach außen erstreckende, federnde Haltefinger angeordnet sind, deren Enden nach unten über die Unterseite der Halteplatte hinausragen. Die federnden Haltefinger gleichen Maßabweichungen der Befestigungsanordnung aus und sorgen für eine definierte Anpreßkraft, mit der der Clip sich an dem zweiten Bauteil und in der Gegenrichtung sich am Kopf des Zapfens abstützt.

Der Randbereich der Halteplatte, der die muldenartige Vertiefung umgibt, kann radial nach außen schräg abfallend geformt sein. Dies trägt zur Steifigkeit der Halteplatte bei und ermöglicht die Ausbildung von Verstärkungsrippen auf ihrer Unterseite. Außerdem sorgt diese Gestaltung für einen besseren Übergang zur Oberfläche des zweiten Bauteils, was insbesondere bei der Anordnung des Clips an Außenflächen von Fahrzeugen die Gefahr der Beschädigung durch Steinschlag oder dergleichen vermindert.

Zur Verriegelung des Clips in der Montagestellung weist dieser einen federnden Sperrfmger auf, der mit seinem freien Ende in die Einführöffnung des U-förmigen Haltebereichs derart hineinragt, daß er beim Einführen des Bolzens in den U-förmigen Haltebereich durch den Kopf aus dessen Einführbahn verdrängbar ist und durch den der Kopf in der eingeführten Stellung in dem U-förmigen Haltebereich festhaltbar ist. Hierdurch wird mit vergleichsweise geringer Kraft zum Verschieben des Clips in die Montagestellung eine sehr wirksame Sicherung des Clips gegen selbsttätiges Lösen erzielt.

Das Befestigungssystem nach der Erfindung umfaßt ein erstes Bauteil, das einen von seiner Oberfläche abstehenden Zapfen hat, der an seinem freistehenden Ende einen Kopf aufweist, ferner ein zweites, plattenförmiges Bauteil mit einer Öffnung zum Hindurchstecken des Zapfens, wobei die Dicke des zweiten Bauteils kleiner ist als die Länge des Zapfens, und einen Clip mit einem U-förmigen, eine Einführöffnung aufweisenden Haltebereich, der den Zapfen unterhalb des Kopfes umgreift und eine Abstützplatte aufweist, die in ihrer Mitte eine muldenartige Vertiefung hat, wobei im Zentrum der Vertiefung eine Ausnehmung vorgesehen ist, in der der U-förmige Haltebereich versenkt angeordnet ist.

Das beschriebene Befestigungssystem ist kostengünstig herstellbar und ermöglicht eine einfache Montage von Hand. Bei dem Zapfen kann es sich um einen T-förmigen Schweißbolzen handeln, der durch Hubzündungsschweißen an dem ersten Bauteil, z.B. einem Blechteil eines Fahrzeugs, angebracht ist. Bei dem ersten Bauteil kann es sich aber auch um ein Befestigungselement aus Kunststoff handeln, das mit Hilfe eines Befestigungsclips mit einem dritten Bauteil verbindbar ist und das einen einstückig angeformten Zapfen hat, der zur Befestigung des zweiten Bauteils mit Hilfe des erfindungsgemäßen Clips dient.

Die Erfindung wird nachfolgend anhand von Ausführungsbeispielen näher erläutert, die in der Zeichnung dargestellt sind. Es zeigen
- Figur 1: eine Seitenansicht eines Clips nach der Erfindung,
- Figur 2: eine Draufsicht eines Clips nach der Erfindung,
- Figur 3: einen in Montagerichtung verlaufenden Querschnitt eines Befestigungssystems nach der Erfindung,
- Figur 4: einen quer zur Montagerichtung verlaufenden Querschnitt des Befestigungssystems gemäß Figur 3,
- Figur 5: ein in Montagerichtung des Clips verlaufender Querschnitt eines zweiten Befestigungssystems nach der Erfindung und
- Figur 6: einen quer zur Montagerichtung des Clips verlaufenden Querschnitt des zweiten Befestigungssystem nach der Erfindung.

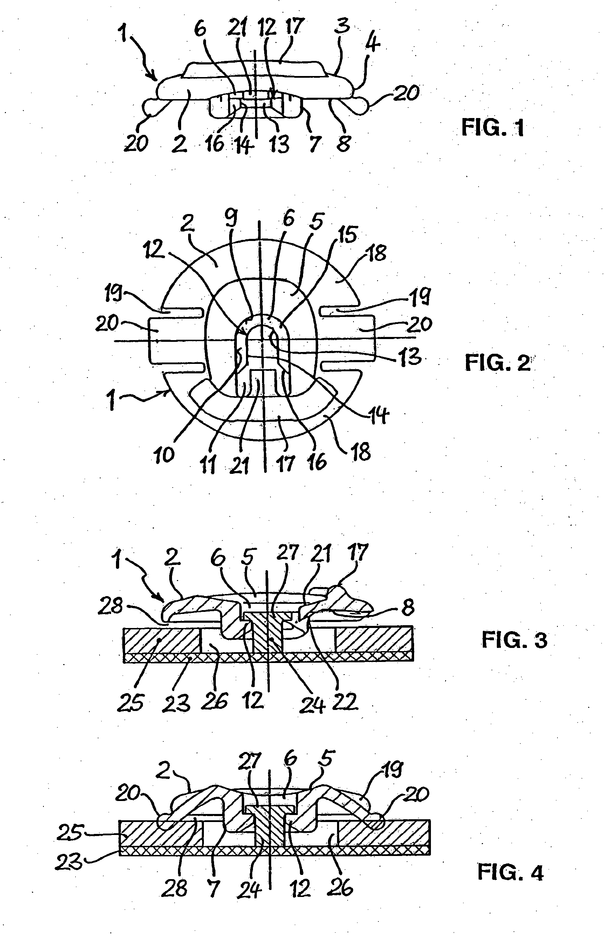

Der in den Figuren 1 und 2 gezeigte Clip 1 ist aus Kunststoff hergestellt und besteht im wesentlichen aus einer kreisscheibenförmigen Halteplatte 2, die eine leicht konvex gewölbte Oberseite 3 und einen gerundeten Rand 4 hat. Auf der Oberseite 3 weist die Halteplatte 2 eine den mittleren Bereich umfassende muldenartige Vertiefung 5 auf, in deren Mitte sich eine die Halteplatte 2 durchdringende Ausnehmung 6 befindet. Die Ausnehmung 6 ist von einer U-förmigen Wand 7 umgeben, die auf der Unterseite 8 der Halteplatte 2 angeordnet ist und im wesentlichen senkrecht zur Grundebene der Halteplatte 2 von dieser nach unten absteht. Die Ausnehmung 6 wird von einem zylindrischen Flächenabschnitt 9 und zwei parallelen, ebenen Flächenabschnitten 10 begrenzt, zwischen denen eine Einführöffnung 11 gebildet ist. In der Ausnehmung 6 befindet sich nach unten versenkt ein U-förmiger Haltebereich 12, der enger ist als die Ausnehmung 6 und einen zum Flächenabschnitt 9 koaxialen zylindrischen Flächenabschnitt 13 und zwei parallele Flächenabschnitte 14 aufweist. Die Oberseite des Haltebereichs 12 bildet eine ebene, zur Zylinderachse der Flächenabschnitte 9, 13 rechtwinkelige Anlagefläche 15. An die Flächenabschnitte 14 schließen sich divergierende Rampenflächen 16 an, die den Übergang zur Einführöffnung 11 bilden. Die Zylinderachse der Flächenabschnitte 9, 13 befindet sich im Zentrum der Halteplatte 2 und verläuft senkrecht zu deren Grundebene.

Die Halteplatte 2 weist auf ihrer Oberseite weiterhin eine wulstartige Erhöhung 17 auf, die sich auf der der Einführöffnung 11 benachbarten Seite längs des Randes der muldenartigen Vertiefung 5 erstreckt. Abgesehen von der Erhöhung 17 sind die äußeren Randbereiche 18 der Halteplatte 2, die die muldenartige Vertiefung 5 umgeben, radial nach außen und zur Unterseite hin leicht abfallend geneigt.

Auf zwei einander gegenüberliegenden, sich an die Erhöhung 17 anschließenden Seiten ist die Halteplatte 2 mit Randausnehmungen 19 versehen, in denen sich nach außen und schräg nach unten erstreckende, federnde Haltefinger 20 befinden. Die Enden der Haltefinger 20 ragen über den Rand und die Unterseite der Halteplatte 2 hinaus und bilden so eine nachgiebige Abstützung zum Andrücken des mit dem Clip 1 zu befestigenden Bauteils.

An der der Einführöffnung 11 benachbarten Wand der Ausnehmung 6 befmdet sich ein Sperrfinger 21, der in die Einführöffnung 11 hineinragt. Der Sperrfmger 21 hat an seiner Unterseite eine Rampenfläche 22, die bei der Montage mit dem Kopf eines in den Haltebereich 12 einzuführenden Zapfens zusammenwirkt, um den Sperrfinger 21 aus der Einführöffnung herauszudrängen und dadurch die Montage des Kopfes zu ermöglichen. Sobald der Kopf des Zapfens vollständig in den Haltebereich 12 eingedrungen ist, springt der Sperrfinger 21 in seine Ausgangslage zurück und hält dadurch den Kopf in dem Haltebereich 12 fest.

In den Figuren 3 und 4 ist ein erstes Befestigungssystem dargestellt, welches unter Verwendung eines Clips 1 gebildet ist. Bei diesem Befestigungssystem ist an einem ersten, aus Blech bestehenden Bauteil 23, beispielsweise einem Karosserieteil eines Fahrzeugs, ein im Querschnitt T-förmiger Bolzen 24 aus Metall angeschweißt. An dem Bolzen 24 ist mit Hilfe des Clips 1 ein zweites Bauteil 25, beispielsweise ein Verkleidungsteil, befestigt. Das zweite Bauteil 25 hat eine Öffnung 26, deren Rand den Bolzen 24 mit Abstand umgibt, so daß die Wand 7 des Clips 1 von der Öffnung 26 aufgenommen werden kann und Lageabweichungen des Bauteils 25 gegenüber dem Bolzen 24 ausgeglichen werden können.

In der Zeichnung ist der Clip 1 in seiner Montageposition gezeigt. Hierbei befindet sich der Bolzen 24 in dem Haltebereich 12 und der Kopf 27 des Bolzens 24 in der Ausnehmung 6. Der Sperrfinger 21 liegt dem Rand des Kopfes 27 unmittelbar gegenüber und hält diesen in der Ausnehmung 6 fest. Die Haltefinger 20 liegen mit Vorspannung an dem Bauteil 25 an und halten das Befestigungssystem spielfrei. Zwischen dem Rand der Halteplatte 2 und der Oberfläche des Bauteils 25 ist ein geringer Zwischenraum 28 vorhanden, der zur Erleichterung des Montagevorgangs dient.

Um den Clip 1 zu montieren, wird dieser mit seiner unter der Erhöhung 17 befmdlichen Unterseite 8 auf den Kopf 27 des Bolzens 24 aufgelegt. Anschließend wird der Clip 1 von Hand mit Hilfe eines in die Vertiefung 5 eingreifenden Daumens oder Fingers quer zur Längsachse des Bolzens 24 in Richtung der Erhöhung 17 verschoben und gleichzeitig nach unten gegen das Bauteil 25 gedrückt. Bei diesem Vorgang dringen der Bolzen 24 und sein Kopf 27 durch die Einführöffnung 11 in den Haltebereich 12 und die Ausnehmung 6 ein, wobei der Sperrfmger 21 federnd nach oben ausweicht und nach Erreichen der Montageendposition wieder in die Ausgangslage zurückspringt. Durch die versenkte Anordnung des Haltebereichs 12 in der Ausnehmung 6 kann der Kopf 27 des Bolzens 24 bei diesem Vorgang unter dem Daumen oder dem Finger hindurchgleiten, ohne diesen nennenswert zu berühren.

Hierdurch wird die Montagebewegung nicht durch Druck von Daumen oder Finger auf den Kopf des Bolzens behindert.

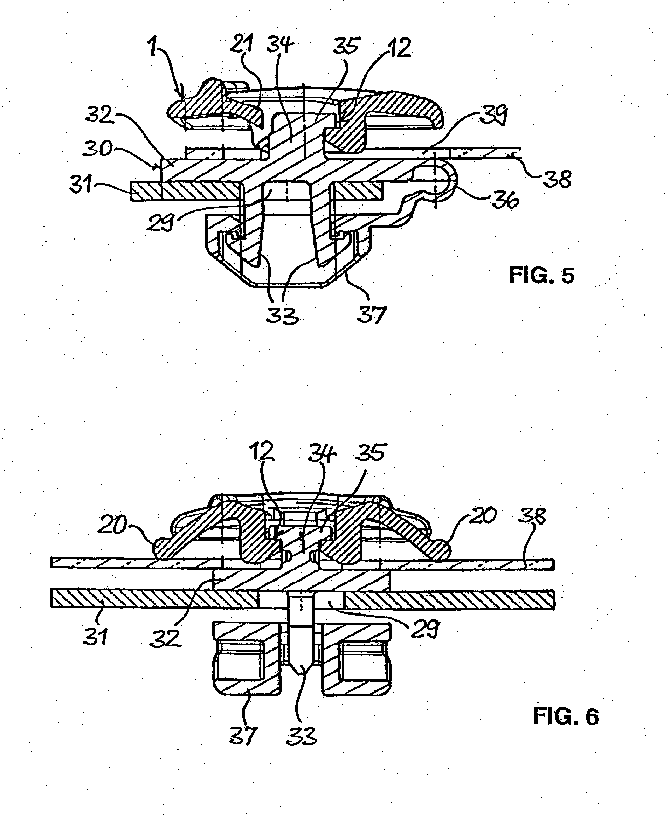

In den Figuren 5 und 6 ist ein Befestigungssystem gezeigt, bei dem das erste Bauteil ein Befestigungselement 30 ist, das an einem weiteren Bauteil 31, beispielsweise einer Verkleidungsplatte, angebracht ist. Das Befestigungselement 30 hat eine Trägerplatte 32, die auf einer Seite Sperrhaken 33 und auf der entgegengesetzten Seite einen Zapfen 34 mit einem Kopf 35 trägt. An die Trägerplatte 32 ist über ein Biegescharnier 36 ein Verschlußelement 37 angeformt. Das Befestigungselement 30 ist mit den Sperrhaken 33 in eine Öffnung 29 am Rand des Bauteils 31 eingesetzt und durch Einhaken des Verschlußelements 37 in die Sperrhaken 33 mit dem Bauteil 31 formschlüssig verbunden. Das Spiel zwischen der Trägerplatte 32 und dem Verschlusselement 37 dient zum Ausgleich von Dickenunterschieden des Bauteils 31.

Mit Hilfe des Befestigungselements 30 und des Clip 1 ist das Bauteil 31 an einem zweiten Bauteil 38, beispielsweise einem Blechteil einer Fahrzeugkarosserie, befestigt. Hierzu ist der Zapfen 34 von einer Seite in eine Öffnung 39 im Bauteil 38 eingesteckt und dann von der entgegengesetzten Seite der Clip 1 von Hand längs der Oberfläche des Bauteils 38 auf den Zapfen 34 aufgeschoben, bis der Zapfen 34 mit seinem Kopf 35 die in der Zeichnung dargestellte Montageendposition erreicht hat, in welcher der Zapfen 34 im Haltebereich 12 des Clips 1 durch den Sperrfinger 21 festgehalten wird. Die Haltefinger 20 liegen in der Montageendposition mit Vorspannung an dem Bauteil 38 an, wodurch dieses an die Trägerplatte 32 des Befestigungselements angedrückt wird. Die Gegenkraft ist über den Haltebereich 12 an dem Kopf 35 des Zapfens 34 abgestützt.

## Patentansprüche

1. Clip (1) zum Verbinden zweier Bauteile, umfassend einen eine Einführöffnung aufweisenden Haltebereich (12), der dazu bestimmt ist, einen von dem ersten Bauteil (23) abstehenden und eine Öffnung (26) im zweiten Bauteil (25) durchdringenden Zapfen (24), der an seinem freistehenden Ende einen Kopf (27) hat, unterhalb des Kopfes zu umgreifen, **gekennzeichnet durch** eine zur Abstützung am zweiten Bauteil und in der Gegenrichtung am Kopf (27) des Zapfens (24) ausgebildete Halteplatte (2), die auf ihrer Oberseite in ihrer Mitte eine muldenartige Vertiefung (5) und im Zentrum der muldenartigen Vertiefung (5) eine Ausnehmung (6) hat, in welcher der Haltebereich (12) ausgebildet und nach unten versenkt angeordnet ist.

2. Clip nach Anspruch 1, **dadurch gekennzeichnet, daß** auf der Oberseite der Halteplatte (2) an dem der Einführöffnung (11) des Haltebereichs (12) benachbarten Rand der muldenartigen Vertiefung (5) eine wulstartige Erhöhung (17) vorgesehen ist.

3. Clip nach einem der Ansprüche 1 oder 2, **dadurch gekennzeichnet, daß** die Halteplatte (2) auf entgegengesetzten Seiten sich quer zur Montagerichtung erstreckende Randausnehmungen (19) hat, in denen sich vom Rand der Vertiefung nach außen erstreckende, federnde Haltefinger (20) angeordnet sind, deren Enden nach unten über die Unterseite (8) der Halteplatte (2) hinausragen.

4. Clip nach einem der vorhergehenden Ansprüche, **dadurch gekennzeichnet, daß** der Randbereich (18) der Halteplatte (2), der die muldenartige Vertiefung (5) umgibt, radial nach außen schräg abfallend geformt ist.

5. Clip nach einem der vorhergehenden Ansprüche, **dadurch gekennzeichnet, dass** der Haltebereichs (12) eine U-förmig gestaltet ist und sich in Richtung Grundebene der Halteplatte erstreckt.

6. Clip nach einem der vorhergehenden Ansprüche, **dadurch gekennzeichnet, daß** er einen federnden Sperrfinger (21) aufweist, der mit seinem freien Ende in die Einführöffnung (11) des U-förmigen Haltebereichs (12) derart hineinragt, daß er beim Einführen des Zapfens (34) in den U-förmigen Haltebereich (12) durch den Kopf (35) aus dessen Einführbahn verdrängbar ist und daß durch den Sperrfinger (21) der Kopf (35) in der eingeführten Stellung in dem U-förmigen Haltebereich (12) festhaltbar ist.

7. Befestigungssystem mit einem Clip (1) nach einem der vorhergehenden Ansprüche, **gekennzeichnet durch** ein erstes Bauteil (23), das einen von seiner Oberfläche abstehenden Zapfen (24) hat, der an seinem freistehenden Ende einen Kopf (27) aufweist, sowie ein zweites, plattenförmiges Bauteil (25) mit einer Öffnung (26) zum Hindurchstecken des Zapfens (24), wobei die Dicke des zweiten Bauteils (25) kleiner ist als die Länge des Zapfens (24), und wobei der Clip (1) mit seinem U-förmigen, die Einführöffnung (11) aufweisenden Haltebereich (12) den Zapfen (24) unterhalb des Kopfes (27) umgreift.

8. Befestigungssystem nach Anspruch 7, **dadurch gekennzeichnet, daß** der Zapfen ein T-förmiger Bolzen (24) ist, der an das erste Bauteil (23) angeschweißt ist.

9. Befestigungssystem nach Anspruch 7, **gekennzeichnet durch** ein als Befestigungselement (30) aus Kunststoff ausgebildetes erstes Bauteil, das mit Hilfe eines Verschlußelements (37) mit einem dritten Bauteil (31) verbindbar ist und das einen einstückig angeformten Zapfen (34) hat, der zur Befestigung des zweiten Bauteils (38) mit Hilfe des CUps (1) dient.

## Claims

1. Clip (1) for joining two structural parts, comprising a holding region (12) having an insert opening, and being adapted to reach around under a head (27) of a pin (24) having the head at its free-standing end, projecting from a first structural part (23) and penetrating an opening (26) in the second structural part (25), **characterized by** a holding plate (2) designed for the support on the second structural part and in opposite direction on the head (27) of the pin (24), which holding plate (2) in its center has a trough-like depression (5) and in the center of the trough-like depression has a recess (6) in which the holding region (12) is formed and located sunken downwards.

2. Clip according to Claim 1, **characterized in that** a bead-like elevation (17) is provided on the upper side of the holding plate (2) at the edge of the trough-like depression (5) adjacent to the insert opening (11) of the holding region (12).

3. Clip according to either of Claims 1 or 2, **characterized in that** the holding plate (2) has on opposite sides edge recesses (19) extending transverse to the direction of assembly, in which are located springy holding fingers (20) extending outward from the edge of the depression, whose ends project downward over the underside (8) of the holding plate (2).

4. Clip according to any of the preceding claims, **characterized in that** the edge region (18) of the holding plate (2), which surrounds the trough-like depression (5), is shaped obliquely inclined radially outward.

5. Clip according to any of the preceding claims, **characterized in that** the holding region (12) is U-shaped and extends toward a base plane of the holding plate.

6. Clip according to any of the preceding claims, **characterized In that** it has a springy locking finger (21), which with its free end projects into the insert opening (11) of the U-shaped holding region (12) in such a way that upon introduction of the pin (34) into the U-shaped holding region (12) it is capable of being forced out of its entry path by the head (35) and that the head (35) is capable of being held firmly in the entry position in the U-shaped holding region (12) by the locking finger (21).

7. Fastening system with a clip (1) according to any of the preceding claims, **characterized by** a first structural part (23) that has a pin (24) projecting from its surface, which at its free-standing end has a head (27), as well as a second, plate-shaped structural part (25) with an opening (26) for passage of the pin (24), where the thickness of the second structural part (25) is smaller than the length of the pin (24), and where the clip (1) with its U-shaped holding region (12) having the insert opening (11) reaches around the pin (24) under the head (27).

8. Fastening system according to Claim 7, **characterized in that** the pin is a T-shaped bolt (24), which is welded to the first structural part (23).

9. Fastening system according to Claim 7, **characterized by** a first structural part designed as a fastening element (30) of synthetic material, which is capable of being joined to a third structural element (31) with the aid of a locking element (37) and which has a pin (34), formed on in one piece, which serves for fastening of the second structural part (38) with the aid of the clip (1).

## Revendications

1. Clip (1) pour la liaison de deux composants, comprenant une zone de maintien (12) présentant une ouverture d'introduction, qui est conçue pour entourer un tenon (24), éloigné du premier composant (23) et traversant une ouverture (26) dans le deuxième composant (25), qui possède, à son extrémité libre, une tête (27), en-dessous de cette tête, **caractérisé par** une plaque de maintien (2) conçue pour un appui contre un deuxième composant et dans la direction opposée sur la tête (27) du tenon (24) et qui possède, sur son côté supérieur, en son centre, un creux en forme de cuvette (5) et, au centre du creux en forme de cuvette (5), un évidement (6), dans lequel la zone de maintien (12) est réalisée et est disposée de manière enfoncée vers le bas.

2. Clip selon la revendication 1, **caractérisé en ce que**, sur le côté supérieur de la plaque de maintien (2), sur le bord, adjacent à l'ouverture d'introduction (11) de la zone de maintien (12), du creux en forme de cuvette (5), se trouve un bossage (17) en forme de bourrelet.

3. Clip selon l'une des revendications 1 ou 2, **caractérisé en ce que** la plaque de maintien (2) possède, sur des côtés opposés, des évidements de bords (19) s'étendant transversalement par rapport à la direction du montage, dans lesquels se trouvent des taquets de maintien (20) élastiques s'étendant du bord du creux vers l'extérieur, dont les extrémités dépassent vers le bas du côté inférieur (8) de la plaque de maintien (2).

4. Clip selon l'une des revendications précédentes, **caractérisé en ce que** la zone de bord (18) de la plaque de maintien (2), qui entoure le creux en forme de cuvette (5), présente une forme tombent de manière oblique radialement vers l'extérieur.

5. Clip selon l'une des revendications précédentes, **caractérisé en ce que** la zone de maintien (12) présente une forme de U et s'étend en direction du plan de base de la plaque de maintien.

6. Clip selon l'une des revendications précédentes, **caractérisé en ce qu'**il comprend un taquet de blocage élastique (21) qui, avec son extrémité libre, dépasse dans l'ouverture d'introduction (11) de la zone de maintien (12) en forme de U de façon à ce que, lors de l'introduction du tenon (34), il puisse être comprimé par la tête (35) hors de sa trajectoire d'introduction et de façon à ce que le taquet de blocage (21) permette de fixer la tête (35) dans la position introduite dans la zone de maintien (12) en forme de U.

7. Système de fixation avec un clip (1) selon l'une des revendications précédentes, **caractérisé par** un premier composant (23), qui présente un tenon (24) écarté de sa surface, qui présente, au niveau de son extrémité libre, une tête (27) ainsi qu'un deuxième composant (25) en forme de plaque avec une ouverture (26) pour l'emboîtement du tenon (24), l'épaisseur du deuxième composant (25) étant inférieure à la longueur du tenon (24) et le clip (1) entourant, avec sa zone de maintien (12) en forme de U et comprenant l'ouverture d'introduction (11), le tenon (24) en dessous de la tête (27).

8. Système de fixation selon la revendication 7, **caractérisé en ce que** le tenon est une tige (24) en forme de T qui est soudé au premier composant (23).

9. Système de fixation selon la revendication 7, **caractérisé par** un premier composant conçu comme un élément de fixation (30) en matière plastique, qui peut être relié à l'aide d'un élément de fermeture (37) avec un troisième composant (31) et qui comprend un tenon (34) formé d'une seule pièce, qui sert à fixer le deuxième composant (38) à l'aide du clip (1).
